# EUROPÄISCHE PATENTSCHRIFT

(11) **EP 1 428 610 B1**
(45) Veröffentlichungstag und Bekanntmachung des Hinweises auf die Patenterteilung: **06.05.2009**
(21) Anmeldenummer: 03027938.4
(22) Anmeldetag: 04.12.2003
(51) Int. Cl.: B23K 35/38, B23K 1/005

(54) **Verwendung eines Schutzgasgemisch für das Laser-Löten von Metallwerkstoffen**
Use of a protective gas for laser soldering of metallic materials
Utilisation d'un gaz protecteur pour le soudage laser de matériaux métalliques

(30) Priorität: 11.12.2002 DE 10257802
(43) Veröffentlichungstag der Anmeldung: 16.06.2004
(73) Patentinhaber: Air Liquide Deutschland GmbH, 40235 Düsseldorf (DE); Messer Group GmbH, 65843 Sulzbach (DE)
(72) Erfinder: Kaya, Cerkez, 47804 Krefeld (DE)
(74) Vertreter: Kahlhöfer, Hermann

(56) Entgegenhaltungen:
- WO-A1-20/04014598
- DE-A- 10 218 297
- DE-A- 19 750 586

## Beschreibung

Die Erfindung betrifft ein Schutzgas für das Laser-Löten von Metallwerkstoffen, insbesondere von un- und niedriglegierten Baustählen.

Das Fügen von Metallwerkstoffen durch Laserschweißen oder Löten unter einer Argon-Helium-Schutzgasstmosphäre mit/ohne Aktivgaszusätzen ist allgemein bekannt, beispielsweise aus der DE 19 750 586 A1.

Des Weiteren ist bekannt, dass beim Fügen von Metallwerkstoffen das Löten, wie beispielsweise das Metall-Schutzgas-Löten (MSG-Löten), im Vergleich zum Schweißen, wie beispielsweise das Laserschweißen, wichtige Vorteile, wie beispielsweise eine hohe Prozesssicherheit, eine bessere Nahtqualität, eine sehr gute Verbindungsfestigkeit sowie eine hohe Korrosionsbeständigkeit, aufweist.

Jedoch blieben bisher alle Versuche, die bekannten Vorteile des Laserschweißens auf das MSG-Löten zum Fügen von Metallwerkstoffen, insbesondere von unlegierten und niedriglegierten Baustählen, zu übertragen, erfolglos, da kein für den Einsatz eines CO2-Lasers beim Löten von Metallwerkstoffen geeignetes Schutzgas zur Verfügung stand.

Ein beim CO2-Laser-Löten von Metallwerkstoffen einsetzbares Schutzgas muss - zusätzlich zu seiner eigentlichen Schutzfunktion - bewirken, dass die beim Löten eingesetzten Lotwerkstoffe, wie z.B. Bronze- oder Kupfer- bzw. Kupferlegierungs-Draht, trotz des eine geringe, spezifische Wellenlänge (Lambda = 10,6 µm) aufweisenden CO2-Gaslaserstrahls so aufgeschmolzen werden, das die Metallteile dauerhaft zusammengelötet sind.

Der Erfindung liegt daher die Aufgabe zugrunde, ein Schutzgas zum CO2- Laser-Löten von Metallen, insbesondere von Bauteilen aus un- und niedriglegierten Stahl, zu schaffen, welches unabhängig von der Laserwellenlänge und dem Absorptionsvermögen der zu lötenden Metallteile einen stabilen CO2-Laser-Löt-Prozess mit einer störungsfreien Energie-Umsetzung und somit gleichmäßige und fehlerfreie Lötnähte ermöglicht.

Die erfindungsgemäße Aufgabe wird durch ein Verwendung eines Schutzgasgemisches mit den Merkmalen des Anspruchs 1 und ein Verfahren zum Laser-Löten mit den Merkmalen des Anspruchs 5 gelöst.

Vorteilhafte Ausgestaltungen der Erfindung sind in den Unteransprüchen beschrieben.

Die erfindungsgemäße Verwendung eines 5 - 30% Helium, Rest Argon, bestehenden Schutzgasgemisch, sowie das entsprechende erfindungsgemäße Verfahren ermöglicht ein effizientes und qualitätsgerechtes CO2-Laser-Löten von Metallwerkstoffen, insbesondere von un- und niedriglegierten Baustählen.

Durch den bis zu 95 Vol.-% betragenen Argon-Anteil im Schutzgasgemisch werden die CO2-Laserstrahlen in der Weise absorbiert, dass ein die optimale Einkopplung des Laserstrahls in die Werkstückoberfläche bewirkendes Plasma gebildet wird.

Das in dem, für das Laser-Löten von Metallwerkstoffen vorteilhaft einsetzbaren Schutzgasgemisch enthaltende Argon erzeugt in Verbindung mit dem bis zu 30 % betragenen Helium-Anteil ein gezielt, stabiles, energieintensives Plasma zum schlagartigen Erschmelzen der beim Löten eingesetzten Lotwerkstoffe, wie beispielsweise Bronze-, Kupfer- oder Kupferlegierungs-Drähte.

Des Weiteren bewirken die im erfindungsgemäßen Schutzgasgemisch zum Löten von Metallwerkstoffen mittels eines CO2-Laserstrahlen enthaltenden Helium- und Aktivgas-Anteile eine optimale Wärmeleitung und Benetzung der Werkstückoberfläche.

Für das Laser-Löten von Metallen ist ein Schutzgasgemisch mit einem Volumenanteil von 85 % Argon (Ar) und 15% Helium (He) besonders vorteilhaft einsetzbar.

Das erfindungsgemäße Schutzgasgemisch ist besonders für das Laser-Löten von un- und niedriglegierten Baustählen und von beschichteten oder unbeschichteten Stahlblechen geeignet.

## Patentansprüche

1. Verwendung eines Schutzgasgemisches mit einem Volumenanteil von 5-30% Helium, Rest Argon, zum CO2-Laser-Löten von Metallwerkstoffen.

2. Verwendung nach Anspruch 1, bei der unlegierte Baustähle gelötet werden.

3. Verwendung nach Anspruch 1oder 2, bei der niedriglegierte Baustähle gelötet werden.

4. Verwendung nach einem der vorhergehenden Ansprüche, bei der das Schutzgasgemisch 85% Argon und 15% Helium enthält.

5. Verfahren zum CO2-Laser-Löten von Metallen unter Verwendung eines Schutzgasgemisches gemäß einem der Ansprüche 1 bis 4.

## Claims

1. Use of a shielding gas mixture with a helium content of from 5-30% by volume, remainder argon for the CO₂ laser soldering of metallic materials.

2. Use according to Claim 1, in which unalloyed structural steels are soldered.

3. Use according to Claim 1 or 2, in which low-alloy structural steels are soldered.

4. Use according to one of the preceding claims, in which the shielding gas mixture comprises 85% argon and 15% helium.

5. Process for the CO₂ laser soldering of metals using a shielding gas mixture according to one of Claims 1 to 4.

## Revendications

1. Utilisation d'un mélange de gaz de protection avec une proportion d'hélium comprise entre 5 et 30 % en volume, le reste étant de l'argon, pour le soudage par faisceau laser CO₂ de matériaux métalliques.

2. Utilisation selon la revendication 1, dans laquelle on soude des aciers de construction non-alliés.

3. Utilisation selon les revendications 1 ou 2, dans laquelle on soude des aciers de construction faiblement alliés.

4. Utilisation selon l'une des revendications précédentes, ledit mélange de gaz de protection contenant 85 % d'argon et 15 % d'hélium.

5. Procédé destiné à souder des métaux par faisceau laser CO₂, en utilisant un mélange de gaz de protection selon l'une des revendications 1 à 4.
